(19) Europäisches Patentamt

European Patent Office

Office européen des brevets

(11) **EP 2 933 291 A1**

(12) **EUROPEAN PATENT APPLICATION**

(43) Date of publication:
**21.10.2015 Bulletin 2015/43**

(51) Int Cl.:
***C08L 23/14*** *(2006.01)*

(21) Application number: **14165096.0**

(22) Date of filing: **17.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Borealis AG**
**1220 Vienna (AT)**

(72) Inventors:
• **Grestenberger, Georg**
  **3352 St.Peter in der AU (AT)**

• **Kahlen, Susanne**
  **4060 Leonding (AT)**
• **Sandholzer, Martina**
  **4030 Linz (AT)**

(74) Representative: **Juntunen, Anne Kaarina**
**Borealis Polymers Oy**
**P.O. Box 330**
**06101 Porvoo (FI)**

(54) **Propylene copolymer composition for pipe applications**

(57) A propylene copolymer composition which comprises
-a random copolymer of propylene (A) and
-a heterophasic copolymer of propylene (B), suitable for pressure pipe applications.

**Description**

**Field of the Invention**

The present invention relates to new propylene copolymer compositions suitable for pipe applications, to articles comprising said propylene copolymer composition and to process for producing said propylene copolymer composition.

**Background Art**

Random copolymers of propylene are especially suitable for pressure pipe applications for hot and cold water, as well as for industrial pipes, since the random copolymers have inter alia good creep resistance.
In such pressure pipe applications the pipe must also meet the requirements set for other mechanical properties like sufficient impact strength and stiffness.
However, it is well known that increasing one of the creep, impact or stiffness properties normally sacrifices the others.
Accordingly, for instance random copolymers of propylene can have limitations in certain pressure pipe applications.
To meet the increasing demands in end use applications, there is a continuous need for further polypropylene copolymer compositions with an improved balance of impact and stiffness properties while maintaining the good creep properties.

**Description of the Invention**

Accordingly, the present invention is directed to a propylene copolymer composition which has a $MFR_2$ of 0.05 to 1.0 g/10 min (ISO 1133, 2.16 kg load, 230°C) and a xylene cold soluble (XCS) fraction in an amount of from 4.5 to 7.6 wt% based on the weight of the propylene copolymer composition, when measured according to ISO 16152 (at 25°C), and wherein the propylene copolymer composition comprises:

-    85 to 99.5 wt% of a random copolymer of propylene (A) with one or more comonomers selected from ethylene and a C4 to C12 olefin, and
-    0.5 to 15 wt% of a heterophasic copolymer of propylene (B) with one or more comonomers selected from ethylene and a C4 to C12 olefin; the amounts being based on the combined amount of the random copolymer of propylene (A) and the heterophasic copolymer of propylene (B); and

-    optional additives;
     wherein
-    the heterophasic copolymer of propylene (B) comprises

     -    a polypropylene matrix component and
     -    an elastomeric propylene copolymer component which is dispersed in said polypropylene matrix, and
          wherein the heterophasic copolymer of propylene (B) has
     -    a xylene cold soluble (XCS) fraction in amount of 10 to 50 wt% based on the weight of the heterophasic copolymer of propylene (B), when measured according to ISO 16152 (at 25°C),
     -    a comonomer content of the xylene cold soluble (XCS) fraction of 3.0 to 15 mol% and
     -    an intrinsic viscosity (IV) of the xylene cold soluble (XCS) fraction of 4 to 12 dl/g, when measured according to DIN ISO 1628-1, October 1999 (at 135°C in decaline).

"Propylene copolymer composition" is referred herein also as "composition of the invention".
"Random copolymer of propylene (A)" is referred herein also as "component (A)".
"Heterophasic copolymer of propylene (B)" is referred herein also as "component (B)". "Xylene cold soluble (XCS) fraction" is referred herein also as "XCS fraction".
"Intrinsic viscosity (IV)" is referred herein also as "IV".
"Polypropylene matrix component" is referred herein also as "matrix component".
"Elastomeric propylene copolymer component" is referred herein also as "elastomeric component".
It has been surprisingly found that the combination of random copolymer of propylene (A) a heterophasic copolymer of propylene (B) having the low amount of comonomer, as given above and below, and the intrinsic viscosity (IV) of the xylene cold soluble (XCS) fraction, as given above and below, results in improved impact-stiffness balance of the final propylene copolymer composition while maintaining the good creep properties. The improved impact-stiffness balance is expressed herein as notched impact strength and as tensile modulus and the creep properties as strain at break. Moreover, the claimed range of the (IV) of the XCS fraction indicates high weight average molecular weight (Mw) of the elastomeric component of the component (B) which is believed to contribute to said advantageous property balance of the invention

The present invention is also directed to an article comprising, preferably consisting of, the composition of the invention. The article is preferably a pipe or pipe fitting, preferably a pipe or fitting for pressure pipe applications, more preferably a pressure pipe or pipe fitting for hot and cold water pipe applications, most preferably a pressure pipe for hot and cold water pipe applications.

The present invention is further directed to a process for producing the composition of the invention. The present invention is further directed to a process for producing an article, preferably a pipe or pipe fitting, comprising, preferably consisting of, the composition of the invention.

A random copolymer of propylene denotes a copolymer of propylene monomer units and comonomer units in which the comonomer units are randomly distributed in the polymeric chain. Thereby, a random copolymer of propylene includes a fraction, which is insoluble in xylene, i.e. xylene cold insoluble (XCU) fraction, in an amount of at least 80 wt%, still more preferably of at least 85 wt% and most preferably of at least 90 wt%, based on the total amount of the random copolymer of propylene. The random copolymer does not contain an elastomeric polymer phase dispersed therein. As known for skilled person, random copolymer is different from heterophasic polypropylene.

Generally, a heterophasic polypropylene is a propylene copolymer comprising a propylene homo or random copolymer matrix component (1) and an elastomeric copolymer component (2) of propylene with one or more of ethylene and C4-C8 olefin copolymers, wherein the elastomeric (amorphous) copolymer component (2) is dispersed in said propylene homo or random copolymer matrix polymer (1).

Accordingly, the heterophasic copolymer of propylene (B) as used herein means that the elastomeric (amorphous) propylene copolymer component (= elastomeric component) is (finely) dispersed in the polypropylene matrix component.

The amount of the xylene cold soluble (XCS) fraction (amorphous fraction) (wt%) of the heterophasic copolymer of propylene (B) is understood in this application also as the amount of the elastomeric (amorphous) propylene copolymer component present in the component (B). I.e. the XCS fraction of component (B) is in practice and regarded herein as the elastomeric component, since the amount of XCS fraction in the matrix component is markedly lower.

Pressure pipe for hot and cold water applications has a well-known meaning in the field of polypropylene pipe applications and implies for a skilled person generally accepted property requirements for the pipe to be usable in such applications.

The composition of the invention, the components (A) and (B) of the invention, the process of the invention and the article of the invention are described below with further details, preferred embodiments, ranges and properties, which preferred embodiments, ranges and properties can be combined in any order.

**Random copolymer of propylene (A)**

The component (A) has preferably a comonomer content of 4.5 to 9.5 mol%, preferably 5.0 to 9.0 mol%, preferably 5.0 to 8.0 mol%, based on the weight of component (A).

The component (A) may comprise only one type of comonomers or two or more types of comonomers. Comonomers of said component (A) are preferably selected from C2 and C4 to C6 alpha-olefins. A particular preferred comonomer is ethylene.

The component (A) has preferably a xylene cold soluble (XCS) fraction in amount of 0.5 to 6 wt%, preferably 1.9 to 5.0 wt% based on the weight of the random copolymer of propylene (A), when measured according to ISO 16152 (at 25°C).

The component (A) has preferably an $MFR_2$ (ISO 1133, 2.16 kg load, 230°C) of 0.05 to 1.0 g/10 min, preferably of 0.1 to 0.7 g/10 min, preferably of 0.15 to 0.5 g/10 min, preferably of 0.15 to 0.4 g/10 min.

The component (A) may be a unimodal or a multimodal random copolymer of propylene which both have a well-known meaning. Preferably the component (A) is multimodal random copolymer of propylene. "Multimodal" means herein that the polymer has at least two polymer fractions which are different e.g. with one or two or more of the following properties: 1) weight average molecular weight, 2) MFR or 3) comonomer content.

The random copolymer of propylene (A) is commercially available or, alternatively, can be produced according to or analogously to conventional polymerisation processes in the presence of a polymerisation catalyst, which processes are well documented in the literature.

As to catalyst, the component (A) can be produced by polymerisation in the presence of any conventional coordination catalyst including Ziegler-Natta, chromium and single site (like metallocene catalyst), preferably in the presence of a Ziegler-Natta catalyst. Such Ziegler-Natta catalysts typically comprise a solid transition metal component and a cocatalyst.

Examples of such solid catalyst components are disclosed, among others, in WO 87/07620, WO 92/21705, WO 93/11165, WO 93/11166, WO 93/19100, WO 97/36939, WO 98/12234, WO 99/33842. Preferred ZN catalyst and its preparation concept is described in general e.g. in patent publications EP 491 566, EP 591 224 and EP 586 390. As is well known, the solid catalyst components for polymerising the propylene random copolymer typically comprise, in addition to the magnesium halide and transition metal compound, an electron donor (internal electron donor). Suitable electron donors are, among others, esters of carboxylic acids, like phthalates, citraconates, and succinates. Also oxygen- or nitrogen-containing silicon compounds may be used. Examples of suitable compounds are shown in WO 92/19659, WO 92/19653, WO 92/19658, US 4,347,160, US 4,382,019, US 4,435,550, US 4,465,782, US 4,473,660, US 4,530,912 and US 4,560,671.

Moreover, said solid catalyst components are preferably used in combination with well-known external electron donors.

It is preferred that the random copolymer of propylene (A) is produced in a sequential polymerization process comprising at least two polymerization zones operating at different conditions to produce the propylene random copolymer. The polymerization zones may operate in slurry, solution, or gas phase conditions or their combinations. Suitable processes are disclosed, among others, in WO-A-98/58975, WO-A-98/58976, EP-A-887380 and WO-A-98/58977.

In case of propylene polymerisation for slurry reactors, the reaction temperature will generally be in the range 60 to 110°C, e.g. 60 to 85 °C, the reactor pressure will generally be in the range 5 to 80 bar, e.g. 20 to 60 bar, and the residence time will generally be in the range 0.1 to 5 hours, e.g. 0.3 to 2 hours. The monomer is usually used as reaction medium.

For gas phase reactors, the reaction temperature used will generally be in the range 60 to 115 °C, e.g. 70 to 110 °C, the reactor pressure will generally be in the range 10 to 25 bar, and the residence time will generally be 0.5 to 8 hours, e.g. 0.5 to 4 hours. The gas used will be the monomer optionally as mixture with a non-reactive gas such as nitrogen or propane.

In general, a combination of slurry (or bulk) and at least one gas phase reactor is often preferred for the polymerisation of the component (A). It is further preferred that the reactor order is slurry (or bulk) then one or more gas phase reactors.

In addition to actual polymerisation steps and reactors, the process can contain any additional polymerisation steps, like prepolymerisation step, and any further after reactor handling steps as known in the art. Any prepolymer is calculated to the amount of the polymer fraction produced in the first reactor.

For further details of the polymerisation process and reactors are disclosed below under the production of the matrix component of component (B).

After component (A) has been removed from the last polymerisation stage, it is preferably subjected to process steps for removing the residual hydrocarbons from the polymer. Such processes are well known in the art and can include pressure reduction steps, purging steps, stripping steps, extraction steps and so on. Also combinations of different steps are possible. After the removal of residual hydrocarbons the component (A) is preferably mixed with additives as it is well known in the art. Such additives are described below under the polymer composition of the invention. The polymer particles are then extruded to pellets as it is known in the art. Preferably co-rotating twin screw extruder is used for the extrusion step. Such extruders are manufactured, for instance, by Coperion (Werner & Pfleiderer) and Japan Steel Works.

**Heterophasic copolymer of propylene (B)**

The component (B) has preferably an intrinsic viscosity (IV) of the xylene cold soluble (XCS) fraction of 4.5 to 12 dl/g, preferably 4.5 to 10 dl/g, more preferably 4.5 to 8 dl/g, when measured according to DIN ISO 1628-1, October 1999 (at 135°C in decaline). Without binding to any theory it is believed that the elastomeric component indicated as XCS fraction with claimed IV range contributes to the beneficial distribution (homogeneity) of the components (A) and (B) in the final polymer composition.

The component (B) may comprise only one type of comonomers or two or more types of comonomers. Comonomers of said component (B) are preferably selected from C2 and C4 to C6 alpha-olefins. A particular preferred comonomer is ethylene. The component (B) has preferably a comonomer content of 1 to 6 mol%, preferably 1.4 to 3.8 mol%, preferably 1.8 to 3.2 mol%, based on the weight of the heterophasic copolymer of propylene (B), wherein the comonomer is preferably ethylene.

The component (B) has preferably a xylene cold soluble (XCS) fraction in amount of 20 to 45 wt%, preferably 20 to 35 wt%, preferably 20 to 30 wt%, preferably 22 to 29 wt%, based on the weight of the heterophasic copolymer of propylene (B), when measured according to ISO 16152 (at 25°C). As mentioned above, in this application the XCS fraction of component (B) represents the elastomeric component.

The amount of the comonomer, which is preferably ethylene, in the xylene cold soluble (XCS) fraction of the component (B) is preferably of 5.0 to 11.0 mol% preferably 6.0 to 9.0 mol%.

The component (B) has preferably a $MFR_2$ of 2.0 to 8.0 g/10min, preferably 2.5 to 7.0 g/10min, preferably 3.0 to 6.0 g/10 min.

The polypropylene matrix component of the component (B) can be a random copolymer of propylene or a homopolymer of propylene.

The matrix component of component (B) may be a unimodal or a multimodal random copolymer or homopolymer of propylene which both have a well-known meaning. Multimodal random copolymer or homopolymer of propylene means herein that it has at least two polymer fractions which are different e.g. with one or two of the following properties: 1) weight average molecular weight or 2) MFR. In case of random copolymer of propylene as the matrix component, the copolymer can also be multimodal with respect to 3) comonomer content, optionally in combination with any or both of the above differences 1) and 2).

It is preferred that the matrix component of the component (B) is a homopolymer of propylene.

The component (B) of the invention is preferably nucleated with a nucleating agent, more preferably with a polymeric nucleating agent. The amount of the nucleating agent is preferably from 0.1 to 10000 ppm by weight. The nucleating agent preferably contributes further to the improved impact-stiffness balance. The preferred nucleating agent is a polymer of a vinyl compound of formula (I) as defined later below under the polymerization process and catalyst description. The amount of the polymer of a vinyl compound of formula (I) present in the compound (B) is preferably as defined later below under the polymerization process and catalyst description.

As will be explained below, the heterophasic copolymer of propylene (B), as well the individual components (matrix and elastomeric components) can be produced by blending different polymer types, i.e. of different molecular weight and/or comonomer content. However it is preferred that the component (B) comprising the matrix component and the elastomeric component are produced in a sequential process, using reactors in serial configuration and operating at different reaction conditions. As a consequence, each fraction prepared in a specific reactor will have its own molecular weight distribution, MFR and/or comonomer content distribution.

The heterophasic copolymer of propylene (B) according to this invention is preferably produced in a sequential polymerization process, i.e. in a multistage process, known in the art, wherein the matrix component is produced at least in one slurry reactor, preferably at least in a slurry reactor, and optionally, and preferably in a subsequent gas phase reactor, and subsequently the elastomeric component is produced at least in one, i.e. one or two, gas phase reactor(s) (gpr), preferably in two gpr.

Accordingly it is preferred that the component (B) is produced in a sequential polymerization process comprising the steps of

(a) polymerizing propylene and optionally at least one ethylene and/or C4 to C12 $\alpha$-olefin, preferably propylene, in the presence of a catalyst in a first reactor (R1),
(b) transferring the reaction mixture of the polymerised first polypropylene, preferably propylene homopolymer, fraction together with the catalyst, into a second reactor (R2),
(c) polymerizing in the second reactor (R2) and in the presence of said first polypropylene polymer, propylene and optionally at least one ethylene and/or C4 to C12 $\alpha$-olefin, preferably propylene, in obtaining thereby the second polypropylene fraction, preferably said second polypropylene fraction is a second propylene homopolymer, whereby said first polypropylene fraction and said second polypropylene fraction form the matrix component of the component (B),
(d) transferring the reaction mixture of the polymerized matrix component of step (c) into a third reactor (R3),
(e) polymerizing in the third reactor (R3) and in the presence of the matrix component obtained in step (c), propylene and at least one ethylene and/or C4 to C12 $\alpha$-olefin obtaining thereby a mixture of the matrix component of step (c) and a first elastomeric propylene copolymer fraction dispersed in component of step (c),
(f) transferring said mixture in a fourth reactor (R4), and
(g) polymerizing in the fourth reactor (R4) and in the presence of the said mixture of step (e), propylene and at least one ethylene and/or C4 to C12 $\alpha$-olefin obtaining thereby the component (B), wherein the elastomeric propylene copolymer component is dispersed in said matrix component.

The term "sequential polymerization process" indicates that the heterophasic copolymer of propylene (B) is produced in at least two, like three or four, reactors connected in series. Accordingly the present process comprises at least a first reactor (R1) and a second reactor (R2), more preferably a first reactor (R1), a second reactor (R2), a third reactor (R3), and optionally, and preferably, a fourth reactor (R4). The term "polymerization reactor" shall indicate that the main polymerization takes place. Thus in case the process consists of four polymerization reactors, this definition does not exclude the option that the overall process comprises for instance a pre-polymerization step in a pre-polymerization reactor. The term "consist of" is only a closing formulation in view of the main polymerization reactors. Any prepolymer fraction is counted into the amount of the first polypropylene fraction.

The first reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR).

The second reactor (R2), the third reactor (R3) and the optional, and preferable, fourth reactor (R4), are preferably gas phase reactors (GPR). Such gas phase reactors (GPR) can be any mechanically mixed or fluid bed reactors. Preferably the gas phase reactors (GPR) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor (R1) is a slurry reactor (SR), like a loop reactor (LR), whereas the second reactor (R2) and the third reactor (R3) are gas phase reactors (GPR). Accordingly for the instant process at least three, preferably four, polymerization reactors, namely a slurry reactor (SR), like a loop reactor (LR), a first gas phase reactor (GPR-1), a second gas phase reactor (GPR-2), a third gas phase reactor (GPR-3) and a fourth gas phase reactor (GPR-4) connected in series are used. If needed prior to the slurry reactor (SR) a pre-polymerization reactor is placed.

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Preferably, in the instant process for producing the heterophasic copolymer of propylene (B) as defined above the conditions for the first reactor (R1), i.e. the slurry reactor (SR), like a loop reactor (LR), of step (a) may be as follows:

- the temperature is within the range of 50 °C to 110 °C, preferably between 60 °C and 100 °C, more preferably between 68 and 95 °C,
- the pressure is within the range of 20 bar to 80 bar, preferably between 40 bar to 70 bar,
- hydrogen can be added for controlling the molar mass in a manner known per se.

Subsequently, the reaction mixture from step (a) is transferred to the second reactor (R2), i.e. gas phase reactor (GPR-1), i.e. to step (c), whereby the conditions in step (c) are preferably as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

The residence time can vary in the three reactor zones.

In one embodiment of the process for producing the component (B) the residence time in bulk reactor, e.g. loop is in the range 0.1 to 2.5 hours, e.g. 0.15 to 1.5 hours and the residence time in gas phase reactor will generally be 0.2 to 6.0 hours, like 0.5 to 4.0 hours.

If desired, the polymerization may be effected in a known manner under supercritical conditions in the first reactor (R1), i.e. in the slurry reactor (SR), like in the loop reactor (LR), and/or as a condensed mode in the gas phase reactors (GPR).

Preferably the process comprises also a prepolymerization with the catalyst system, as described in detail below, comprising a Ziegler-Natta procatalyst, an external donor and optionally a cocatalyst.

In a preferred embodiment, the prepolymerization is conducted as bulk slurry polymerization in liquid propylene, i.e. the liquid phase mainly comprises propylene, with minor amount of other reactants and optionally inert components dissolved therein.

The prepolymerization reaction is typically conducted at a temperature of 10 to 60 °C, preferably from 15 to 50 °C, and more preferably from 20 to 45 °C.

The pressure in the prepolymerization reactor is not critical but must be sufficiently high to maintain the reaction mixture in liquid phase. Thus, the pressure may be from 20 to 100 bar, for example 30 to 70 bar.

The catalyst components are preferably all introduced to the prepolymerization step. However, where the solid catalyst component (i) and the cocatalyst (ii) can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.

The precise control of the prepolymerization conditions and reaction parameters is within the skills of the skilled person.

After component (B) has been removed from the last polymerisation stage, it is preferably subjected to process steps for removing the residual hydrocarbons from the polymer. Such processes are well known in the art and can include pressure reduction steps, purging steps, stripping steps, extraction steps and so on. Also combinations of different steps are possible. After the removal of residual hydrocarbons the component (B) is preferably mixed with additives as it is well known in the art. Such additives are described below under the polymer composition of the invention. The polymer particles are then extruded to pellets as it is known in the art. Preferably co-rotating twin screw extruder is used for the extrusion step. Such extruders are manufactured, for instance, by Coperion (Werner & Pfleiderer) and Japan Steel Works.

As to catalyst, the component (B) of the invention can be produced by polymerisation in the presence of any conventional coordination catalyst system including Ziegler-Natta, chromium and single site (like metallocene catalyst), preferably in the presence of a Ziegler-Natta catalyst system. Such Ziegler-Natta catalyst system typically comprises a solid catalyst component, preferably a solid transition metal component, and a cocatalyst, and optionally an external donor. The solid catalyst component comprises most preferably a magnesium halide, a titanium halide and an internal electron donor. Such catalysts are well known in the art.

It is preferred that the component (B) of the invention is produced using a modified catalyst system as described below.
More preferably, a vinyl compound of the formula (I) is used for the modification of the catalyst:

$$CH2=CH-CHR1R2 \qquad (I)$$

wherein R1 and R2 together form a 5- or 6-membered saturated, unsaturated or aromatic ring, optionally containing substituents, or independently represent an alkyl group comprising 1 to 4 carbon atoms, whereby in case R1 and R2 form an aromatic ring, the hydrogen atom of the -CHR1 R2 moiety is not present.

More preferably, the vinyl compound (I) is selected from: vinyl cycloalkane, preferably vinyl cyclohexane (VCH), vinyl cyclopentane, 3-methyl-1-butene polymer and vinyl-2-methyl cyclohexane polymer. Most preferably the vinyl compound (I) is vinyl cyclohexane (VCH) polymer.

The vinyl compound (I), preferably vinyl cyclohexane (VCH), is polymerised in the presence of a catalyst system comprising the solid catalyst component, preferably a solid Ziegler Natta catalyst component, to obtain a modified catalyst system which is the reaction mixture comprising the solid catalyst component and the produced polymer of the vinyl compound of formula (I). The obtained polymer of the vinyl compound (I) acts as a nucleating agent during the polymerisation process of the component (B) of the invention. In the obtained modified catalyst system the weight ratio (g) of the polymer of the vinyl compound of the formula (I), to the solid catalyst component is preferably up to 5 (5:1), preferably up to 3 (3:1) most preferably is from 0.5 (1:2) to 2 (2:1). The obtained modified catalyst system is then used for the polymerisation of the component (B) of the invention of the invention as described above.

General preparation of the modified catalyst system of the invention and the polypropylene nucleated with a vinyl compound (I) is disclosed e.g. in EP 1 028 984.

As to the solid Ziegler Natta catalyst component used for the modification, said catalyst component comprises preferably a transition metal component which preferably is a titanium halide and a magnesium halide. These compounds may be supported on a particulate support, such as inorganic oxide, like silica or alumina, or, usually, the magnesium halide to form above said solid support. Examples of such solid catalyst components are disclosed, among others, in WO 87/07620, WO 92/21705, WO 93/11165, WO 93/11166, WO 93/19100, WO 97/36939, WO 98/12234, WO 99/33842. The solid catalyst components for polymerising the component (B) of the invention typically comprise, in addition to the magnesium halide and transition metal compound, an electron donor (internal electron donor).

Suitable electron donors are, among others, esters of carboxylic acids, like phthalates, citraconates, and succinates. Also oxygen- or nitrogen-containing silicon compounds may be used. Examples of suitable compounds are shown in WO 92/19659, WO 92/19653, WO 92/19658, US 4,347,160, US 4,382,019, US 4,435,550, US 4,465,782, US 4,473,660, US 4,530,912 and US 4,560,671.

Moreover, said solid catalyst components are preferably used in combination with well known external electron donors, including without limiting to, ethers, ketones, amines, alcohols, phenols, phosphines and silanes, for example organosilane compounds containing Si-OCOR, Si-OR, or Si-NR2 bonds, having silicon as the central atom, and R is an alkyl, alkenyl, aryl, arylalkyl or cycloalkyl with 1-20 carbon atoms; and well known cocatalysts, which preferably comprise an aluminium alkyl compound as known in the art, to polymerise the component (B).

When the polymer of the vinyl compound (I) is introduced to the component (B) of the invention during the polymerisation process of the component (B), the amount of polymer of the vinyl compound (I) present in the final component (B) is preferably not more than 500 ppm, more preferably is 0.025 to 200 ppm, still more preferably is 1 to 100 ppm, and most preferably is 5 to 100 ppm, based on the propylene random copolymer (A) and the nucleating agent (B), preferably based on the total weight of the polypropylene composition (100 wt%).

When the component (B) has been removed from the last polymerisation stage, it is preferably subjected to process steps for removing the residual hydrocarbons from the polymer. Such processes are well known in the art and can include pressure reduction steps, purging steps, stripping steps, extraction steps and so on. Also combinations of different steps are possible. After the removal of residual hydrocarbons the second propylene copolymer composition is preferably mixed with additives as it is well known in the art. Such additives are described below. The polymer particles are then extruded to pellets as it is known in the art. Preferably co-rotating twin screw extruder is used for the extrusion step. Such extruders are manufactured, for instance, by Coperion (Werner & Pfleiderer) and Japan Steel Works.

**Propylene copolymer composition**

The composition of the invention preferably comprises, based on the combined amount of the component (A) and the component (B)

- 90 to 99.5 wt%, preferably 91 to 99.2, preferably 91.5 to 99.0, wt% of the random copolymer of propylene (A).
- 0.5 to 10 wt% preferably 0.8 to 9.0, preferably 1.0 to 8.5, wt% of the heterophasic copolymer of propylene (B).

The composition of the invention has preferably an $MFR_2$ of 0.1 to 0.8 g/10 min. For pipe applications the $MFR_2$ is more preferably 0.1 to 0.7 g/10 min.

The composition of the invention may comprise further polymer components that are different from the component (A) and component (B). Most preferably the composition of the invention consists of the component (A) and the component (B) as the polymer components. "Polymer components" excludes herein any carrier polymers of additive products, e.g. a carrier polymer of additive(s) in a well-known master batch, in case the optional additive is present in the composition of the invention in form of a master batch. Such optional carrier polymers are calculated to the amount of the respective additive, based on the amount (100 %) of the composition of the invention.

Accordingly the composition of the invention comprises

- in combined amount of 90 to 99.9999 wt% of the random copolymer of propylene (A) and the heterophasic copolymer of propylene (B) based on the total amount (100 wt%) of the propylene copolymer composition, and
- 0.0001 to 10 wt% of additives, based on the total amount of the propylene copolymer composition.

The total amount of optional additives is preferably between 0.0001 and 5.0 wt%, preferably 0.0001 and 2.5 wt%

As to additives, composition of the invention may contain additives, preferably conventional additives for pipe applications, including without limiting to, nucleating agents, clarifiers, brighteners, acid scavengers and antioxidants, as well as slip agents, inorganic filler and UV light stabilizers. Each additive can be used e.g. in conventional amounts, the total amount of additives present in the propylene composition being preferably as defined above. Such additives are generally commercially available and are described, for example, in "Plastic Additives Handbook", 5th edition, 2001 of Hans Zweifel.

As mentioned the composition of the invention has an excellent balance between mechanical properties and creep properties. Namely, the composition of the invention has e.g. enhanced notched impact strength and tensile modulus, as well as excellent strain properties.

The composition of the invention has a Charpy Notched Impact Strength at 23°C of 20 to 60 kJ/m$^3$, preferably 30 to 55, more preferably 35 to 50, kJ/m$^3$, when determined according to ISO 179/1eA:2000 using notched injection moulded specimen.

The composition of the invention has a Tensile Modulus of 890 to 1000 MPa, preferably 900 to 990, more preferably 940 to 990, MPa, when determined according to ISO 527-2:1996 using type 1A injection moulded test specimen prepared according to EN ISO 1873-2.

The composition of the invention has a Tensile Strain at Break of 430 to 600 %, preferably 440 to 550, more preferably 450 to 500, %, when determined according to ISO 527-2:1996 using type 1A injection moulded test specimen prepared according to ISO 527-2:1996.

Moreover, as shown in the experimental part of the application, the composition of the invention has internal pressure resistance properties which area highly suitable for the pressure pipe applications, preferably for the hot and cold water pressure pipe applications.

The composition of the invention can be produced by polymerising the components (A) and (B) during a same polymerisation process, e.g. in a multistage process or by blending mechanically, preferably by blending the components (A) and (B) mechanically.

Accordingly the invention provides a process for producing the propylene copolymer composition, wherein the random copolymer of propylene (A), the heterophasic copolymer of propylene (B) and the optional additives are mixed together by mechanical mixing means, preferably by mixing in an extruder.

Extruder is the preferred means for blending and can be any conventional, e.g. a commercially available, extruder known in the art. The composition of the invention can be produced separately by compounding the components (A) and (B) together with optional additives in a conventional pelletising extruder to form pellets of the polymer composition, which pellets are then used for producing an article, preferably pipe or pipe fitting. Alternatively, the components (A) and (B) of the composition of the invention may be compounded together with optional additives during the article preparation process which is preferably a conventional extruder for producing pipes.

Examples of preferable extruders are co-rotating twin screw extruders. Such extruders are manufactured, for instance, by Coperion (Werner & Pfleiderer) and Japan Steel Works.

The dispersion of the components (A) and (B) is surprisingly good, whereby a very homogenous mixture of the components in the final composition of the invention is obtained. Without binding to any theory, it is believed that the component (B) with the claimed intrinsic viscosity (IV) of the XCS fraction contributes to the good dispersion behaviour.

**Article**

The article of the invention is preferably selected from an extruded article, preferably a pipe application, or a moulded article, preferably an injection moulded or blow moulded article, application, more preferably a fitting for pipe applications, comprising the composition of the invention.

The pipe and fitting produced from the composition according to the invention preferably have good mechanical properties as described above and shown below in experimental part. Thus, the pipe according to the invention preferably qualifies as pressure pipe, more preferably is a pressure pipe for hot and cold water applications.

Pipe of the invention can be
a monolayer pipe, wherein the pipe layer comprises, preferably consists of, the composition of the invention, or
-a multilayer pipe, wherein at least one layer comprises, preferably consists of, the composition of the invention.
The preferred pipe of the invention has at least one layer, preferably one layer, comprising, preferably consisting of, the composition of the invention. Preferred pipe is a pressure pipe, more preferably a pressure pipe for hot and cold water applications.

Fitting of the invention preferably consists of the composition of the invention.

Production of pipe of the invention:

The invention further provides a process for producing a pipe comprising the steps of:

- producing the propylene copolymer composition according to any of the preceding claims by mixing the random copolymer of propylene (A), the heterophasic copolymer of propylene (B) and the optional additives using mechanical mixing means, preferably by mixing in an extruder, and

- extruding the polymer to a form of a pipe.

The propylene copolymer composition of the invention can be produced as a separately and pelletised for further use of the pipe producer or propylene copolymer composition of the invention can be produced by pipe producer during the pipe extrusion process.

Pipes can be produced from the composition of the present invention according to the methods known in the art. Thus, according to one preferred method the composition of the invention is extruded through an annular die to a desired internal diameter, after which the composition of the invention is cooled.

The pipe extruder preferably operates at a relatively low temperature and therefore excessive heat build-up should be avoided. Extruders having a high length to diameter ratio L/D more than 15, preferably of at least 20 and in particular of at least 25 are preferred. The modern extruders typically have an L/D ratio of from about 30 to 35.
The polymer melt is extruded through an annular die, which may be arranged either as end-fed or side-fed configuration. The side-fed dies are often mounted with their axis parallel to that of the extruder, requiring a right-angle turn in the connection to the extruder. The advantage of side-fed dies is that the mandrel can be extended through the die and this allows, for instance, easy access for cooling water piping to the mandrel.
After the plastic melt leaves the die it is calibrated to the correct diameter. In one method the extrudate is directed into a metal tube (calibration sleeve). The inside of the extrudate is pressurised so that the plastic is pressed against the wall of the tube.

According to another method the extrudate leaving the die is directed into a tube having a perforated section in the centre. A slight vacuum is drawn through the perforation to hold the pipe against the walls of the sizing chamber. After the sizing the pipe is cooled, typically in a water bath having a length of about 5 metres or more.

Production of Fittings of the invention:

Fittings of the invention can be produced from the composition of the invention using the methods and equipment known in the art. Thus, according to one preferred method the composition of the invention is moulded, preferably injection moulded or blown moulded, more preferably injection moulded, in a conventional manner using conventional moulding equipment, to a shape of a fitting for a pipe.

**Description of methods**

Melting temperature ($T_m$) and heat of fusion ($H_f$), crystallization temperature ($T_c$) and heat of crystallization ($H_c$): measured with Mettler TA820 differential scanning calorimetry (DSC) on 5 to 10 mg samples. DSC is run according to ISO 3146 / part 3 /method C2 in a heat / cool / heat cycle with a scan rate of 10 °C/min in the temperature range of +23 to +210°C. Crystallization temperature and **heat of crystallization** ($H_c$) are determined from the cooling step, while melting temperature and **heat of fusion** ($H_f$) are determined from the second heating step

Density is measured according to ISO 1183-1 - method A (2004). Sample preparation is done by compression moulding in accordance with ISO 1872-2:2007.

Melt flow rate

Melt flow rate (MFR, $MFR_2$) was determined according to ISO 1133 at 230 °C under the load of 2.16 kg.

Content of comonomer

Ethylene content, i.e., the content of ethylene units in propylene polymer was measured by Fourier transmission infrared spectroscopy (FTIR). A thin film of the sample (thickness approximately 250 $\mu$m) was prepared by hot-pressing. The area of -CH2- absorption peak (800 - 650 cm$^{-1}$) was measured with Perkin Elmer FTIR 1600 - spectrometer. The method was calibrated by ethylene content data measured by $^{13}$C NMR.
The comonomer content is herein assumed to follow the mixing rule (equation 2):

$$C_b = w_1 \cdot C_1 + w_2 \cdot C_2 \quad (eq.\,2)$$

Where C is the content of comonomer in weight-%, w is the weight fraction of the component in the mixture and subscripts b, 1 and 2 refer to the overall mixture, component 1 and component 2, respectively.

Xylene soluble

The amount of xylene soluble fraction was determined according to ISO 16152. The amount of polymer which remains dissolved at 25 °C after cooling is given as the amount of xylene soluble polymer.
The content of xylene soluble polymer is herein assumed to follow the mixing rule (equation 4):

$$XS_b = w_1 \cdot XS_1 + w_2 \cdot XS_2 \quad (eq.\,4)$$

Where XS is the content of xylene soluble polymer in weight-%, w is the weight fraction of the component in the mixture and subscripts b, 1 and 2 refer to the overall mixture, component 1 and component 2, respectively.

Charpy impact strength notched

NIS was determined according to ISO 179-1eA:2000 on V-notched samples of 80x10x4 mm$^3$ at 23°C, 0°C, -10°C or -20°C, as specified in the experimental part. The test specimens were prepared by injection moulding using an IM V 60 TECH machinery in line with EN ISO 1873-2 (80 *10 x 4 mm$^3$)
The melt temperature was 200 °C and the mould temperature was 40 °C.

Charpy impact strength un-notched

Impact strength was determined according to ISO9854-1and 2. The test piece were milled out of the pipe dimension with a length of 50mm and width 6mm. The test temperature for the impact test was 0°C and for the test a 15Joule hammer was used. The support spacing was 40mm.

Intrinsic viscosity is measured according to DIN ISO 1628-1, October 1999 (in Decalin at 135 °C).

Tensile Modulus; Tensile stress at yield and Tensile strain at break are measured according to ISO 527-2: 1996 (cross head speed = 1 mm/min; 23 °C) using injection molded specimens as described in EN ISO 1873-2 (dog bone shape, 4 mm thickness).

Resistance to internal pressure

The pressure test on un-notched 32 mm SDR 11 pipes having a length of 450 mm is carried out in water-inside and water-outside environment according to ISO 1167-1:2006. End caps type A were used. The time to failure is determined in hours. A hoop stress of 12.4 MPa and a temperature of 20 °C as well as a hoop stress of 5.7 MPa and a temperature of 80 °C were applied.

**Experimental Part**

**Component B: Heterophasic component (B) of the invention**

Catalyst preparation:

First, 0.1 mol of $MgCl_2$ x 3 EtOH was suspended under inert conditions in 250 ml of decane in a reactor at atmospheric pressure. The solution was cooled to the temperature of -15°C and 300 ml of cold $TiCl_4$ was added while maintaining the temperature at said level. Then, the temperature of the slurry was increased slowly to 20 °C. At this temperature, 0.02 mol of diethylhexylphthalate (DOP) was added to the slurry. After the addition of the phthalate, the temperature was raised to 135 °C during 90 minutes and the slurry was allowed to stand for 60 minutes. Then, another 300 ml of $TiCl_4$ was added and the temperature was kept at 135 °C for 120 minutes. After this, the catalyst was filtered from the liquid and washed six times with 300 ml heptane at 80 °C. Then, the solid catalyst component was filtered and dried. Catalyst and its preparation concept is described in general e.g. in patent publications EP 491 566, EP 591 224 and EP 586 390.

Then triethylaluminium (TEAL), dicyclopentyldimethoxysilane (DCPDMS) as donor (Do), catalyst as produced above and vinylcyclohexane (VCH) were added into oil, like mineral oil, e.g. Technol 68 (kinematic viscosity at 40 °C 62-74 cSt), in amounts so that Al/Ti was 3-4 mol/mol, Al/Do was as well 3-4 mol/mol, and weight ratio of VCH/solid catalyst was 1:1. The mixture was heated to 60 - 65 °C and allowed to react until the content of the unreacted vinylcyclohexane in the reaction mixture was less than 1000 ppm. Catalyst concentration in the final oil-catalyst slurry was 10 - 20 wt-%.

Polymerisation:

For the polymerization of the Component B of the invention the catalyst including polymerized VCH was fed together with propylene to a prepolymerization reactor. Triethylaluminium was used as a cocatalyst and dicyclopentyldimethoxysilane as a donor. The polymerization conditions and feeds are listed in Table 1.

The slurry from the prepolymerization stage was directly fed to a loop reactor. Propylene, hydrogen and ethylene were further added to the loop reactor. The polymerization conditions and feeds are listed in Table 1.

The slurry from loop reactor was introduced to a first gas phase reactor via direct feed line, i.e. without monomer flashing in-between the reactors. Propylene, ethylene and hydrogen were fed to the gas phase reactor. The polymerization conditions and feeds are listed in Table 1.

The polymerisation mixture was then fed to a second gas phase reactor via direct feed line, i.e. without monomer flashing in-between the reactors. Propylene, ethylene and hydrogen were fed to the gas phase reactor. The polymerization conditions and feeds are listed in Table 1.

The polymerisation mixture was then fed to a third gas phase reactor via direct feed line, i.e. without monomer flashing in-between the reactors. Propylene, ethylene and hydrogen were fed to the gas phase reactor. The polymerization conditions and feeds are listed in Table 1.

The final Poly-VCH content in the obtained final Component B was 200 ppm or less.

**Table 1:** Preparation of the component B of the invention

| Catalyst | | |
|---|---|---|
| TEA/Ti | [mol/mol] | 123 |

(continued)

| Catalyst | | |
|---|---|---|
| TEAL/Donor | [mol/mol] | 10 |
| **Loop** | | |
| Temperature | [°C] | 76 |
| $MFR_2$ | [g/10min] | 130 |
| $C_2$ | [wt%] | Homopolymer |
| **1st GPR** | | |
| Temperature | [°C] | 80 |
| $MFR_2$ | [g/10min] | 55 |
| $C_2$ | [wt%] | homopolymer |
| **2nd GPR** | | |
| Temperature | [°C] | 65 |
| XCS | [wt%] | 20 |
| $C_2$ total | [mol%] | 7,0 |
| $C_2$ of XCS | [mol%] | 7,5 |
| IV of XCS | [dl/g] | 4,0 |
| **3rd GPR** | | |
| Temperature | [°C] | 83 |
| XCS | [wt%] | 25 |
| $C_2$ total | [mol%] | 3,0 |
| $C_2$ of XCS | [mol%] | 7,5 |
| IV of XCS | [dl/g] | 6,0 |
| | | |
| Tm | [°C] | **166** |
| Split Loop/GPR1 matrix | [wt%] | 55/45 |
| Split matrix/GPR2 | [wt%] | 83/17 |

**Table 2:** Characteristics of the components of the inventive and comparative compositions, i.e. Component (B), Component (A) (as inventive component, as reference and as component of the comparative composition) and comparative component (comparative 1)

| | | Component A | Component B | Comparative 1 |
|---|---|---|---|---|
| MFR total (230 °C, 2.16 kg) | g/10 min | 0,2 | 4 | 4,37 |
| XCS | wt% | 4,6 | 24,5 | 22,09 |
| C2 tot | mol% | - | 2,6 | 1,6 |
| C2(XCS) | mol% | 6,8 | 7,4 | - |
| IV(XCS) decaline | dl/g | - | 6,3 | 1,961 |

Component A: Random copolymer of propylene (A) component of the invention which is a commercial pipe grade RA130E supplied by Borealis AG. (as reference)

Comparative 1: Heterophasic polypropylene polymer (commercially available reference)

a) Producing the Inventive Compositions (IC1-3) reference composition RC1 and

The Component (B) of the inventive Example emerging from the third gas phase reactor (identified as reactor powder in Tables 1 and 2) were compounded together with Component (A) (RA130E) in varying amounts as given in table 3, as well as with conventional antioxidants and Ca-stearate and pelletized in a W&P ZSK 70 twin-screw extruder (Coperion) at a melt temperature of 240°C and an extruder throughput of 200 kg/h.

Also the Comparative 1 component and Component A together with the above additives were compounded as described above.

Table 3. Characterization of inventive and comparative examples

| Compositions/components and results | | RC1 | IC1 | IC2 | IC3 | CE1 | CE2 |
|---|---|---|---|---|---|---|---|
| Component A* | wt% | 100 | 97 | 95 | 93 | 97 | 95 |
| Component B* | wt% | 0 | 3 | 5 | 7 | | |
| Comparative 1 * | wt% | | | | | 3 | 5 |
| MFR (230°C, 2.16 kg) | g/10min | 0,2 | 0,3 8 | 0,4 7 | | 0,4 | 0,4 1 |
| XCS | wt% | 4,6 | 5,2 | 5,6 | 6,0 | 5,1 | 5,5 |
| NOTCHED CHARPY IMPACT STRENGTH at 23°C | kJ/m$^2$ | 13 | 41 | 42 | 43 | 23 | 21 |
| TYPE OF FAILURE | - | P | P | P | P | H | H |
| PENDULUM | J | | 5 | 5 | 5 | 4 | 4 |
| TENSILE MODULUS | MPa | 880 | 964 | 982 | 979 | 936 | 921 |
| TENSILE STRESS AT YIELD | MPa | 28 | 28 | 28 | 28 | 27 | 27 |
| TENSILE STRAIN AT YIELD | % | 13 | 12 | 12 | 12 | 12 | 12 |
| TENSILE STRENGTH | MPa | 28 | 33 | 34 | 34 | 32 | 33 |
| TENSILE STRAIN @ TS | % | 13 | 458 | 465 | 468 | 449 | 461 |
| TENSILE STRESS AT BREAK | MPa | 25 | 33 | 33 | 33 | 32 | 33 |
| TENSILE STRAIN AT BREAK | % | 426 | 462 | 468 | 471 | 450 | 465 |
| * Based on the combined amount of the polymer components | | | | | | | |

As can be seen from results, the inventive compositions the Notched Charpy 23C, Tensile Modulus and Tensile Strain at Break are improved compared to Component A (RC1) alone or to comparative examples CE1 and CE2.

Pipe tests:

Test Pipe preparation: The polymers of Inventive Examples were extruded to pipes by using a Battenfeld Pro R1349 pipe extruder. Temperature profile: Inlet 52°C Cylinder zones 1-4 180°C, 190°C, 210°C, 210°C: Head: all zones 200°C. The pipes had a diameter of 32 mm and wall thickness of 3 mm.

Table 4. Characterization of inventive and comparative pipe test examples

| | | reference | Inventive Compostions (IC) | | |
|---|---|---|---|---|---|
| | | RC1 | IC4 | IC5 | IC1 |
| Components and results | | | | | |
| Component A* | wt% | 100 | 99 | 98 | 97 |
| Component B* | wt% | | 1 | 2 | 3 |
| MFR (230°C, 2.16 kg) | g/10min | 0,2 | 0,3 | 0,37 | 0,38 |

(continued)

| | | reference | Inventive Compostions (IC) | | |
|---|---|---|---|---|---|
| | | RC1 | IC4 | IC5 | IC1 |
| Components and results | | | | | |
| XCS | Wt% | 4,6 | 4,8 | 5,0 | 5,2 |
| Charpy on pipe, unnotched, 0°C | | 74,3 | 79,3 | 82,3 | 80,2 |
| failure type | - | N | N | N | N |
| Pendulum | J | 15 | 15 | 15 | 15 |
| **Resistance to internal pressure** | | | | | |
| Water/Water, 20°C/16MPa | | | | | |
| Mean value 2 pipes | h | 45 | 44 | 55 | 46 |
| * Based on the combined amount of the polymer components | | | | | |

## Claims

1. A propylene copolymer composition which has a $MFR_2$ of 0.05 to 1.0 g/10 min (ISO 1133, 2.16 kg load, 230°C) and a xylene cold soluble (XCS) fraction in an amount of from 4.5 to 7.6 wt% based on the weight of the propylene copolymer composition, when measured according to ISO 16152 (at 25°C), and wherein the propylene copolymer composition comprises:

   - 85 to 99.5 wt% of a random copolymer of propylene (A) with one or more comonomers selected from ethylene and a C4 to C12 olefin, and
   - 0.5 to 15 wt% of a heterophasic copolymer of propylene (B) with one or more comonomers selected from ethylene and a C4 to C12 olefin; the amounts being based on the combined amount of the random copolymer of propylene (A) and the heterophasic copolymer of propylene (B); and
   - optional additives;
   wherein
   - the heterophasic copolymer of propylene (B) comprises

      - a polypropylene matrix component and
      - an elastomeric propylene copolymer component which is dispersed in said polypropylene matrix, and wherein the heterophasic copolymer of propylene (B) has
      - a xylene cold soluble (XCS) fraction in amount of 10 to 50 wt% based on the weight of the heterophasic copolymer of propylene (B), when measured according to ISO 16152 (at 25°C),
      - a comonomer content of the xylene cold soluble (XCS) fraction of 3.0 to 15 mol% and
      - an intrinsic viscosity (IV) of the xylene cold soluble (XCS) fraction of 4 to 12 dl/g, when measured according to DIN ISO 1628-1, October 1999 (at 135°C in decaline).

2. The propylene copolymer composition according to claim 1, wherein the random copolymer of propylene (A) has one or more, in any order, preferably all, of the following properties

   - a xylene cold soluble (XCS) fraction in amount of 0.5 to 6 wt%, preferably 1.9 to 5.0 wt% based on the weight of the random copolymer of propylene (A), when measured according to ISO 16152 (at 25°C) or
   - an $MFR_2$ (ISO 1133, 2.16 kg load, 230°C) of 0.05 to 1.0 g/10 min, preferably of 0.1 to 0.7 g/10 min, preferably of 0.15 to 0.5 g/10 min, preferably of 0.15 to 0.4 g/10 min.

3. The propylene copolymer composition according to any of the preceding claims, wherein heterophasic copolymer of propylene (B) has an intrinsic viscosity (IV) of the xylene cold soluble (XCS) fraction of 4.5 to 12 dl/g, when measured according to ISO 1628-1 (at 135°C in decaline).

4. The propylene copolymer composition according to any of the preceding claims, wherein heterophasic copolymer of propylene (B) has one or more, in any order, preferably all, of the following properties

- a comonomer content of 1 to 6 mol%, preferably 1.4 to 3.8 mol%, preferably 1.8 to 3.2 mol% , based on the weight of the heterophasic copolymer of propylene (B), wherein the comonomer is preferably ethylene,
- a xylene cold soluble (XCS) fraction in amount of 20 to 45 wt%, preferably 20 to 35 wt%, preferably 20 to 30 wt%, preferably 22 to 29 wt%, based on the weight of the heterophasic copolymer of propylene (B), when measured according to ISO 16152 (at 25°C),
- the amount of the comonomer, which is preferably ethylene, in the xylene cold soluble (XCS) fraction of the component (B) is preferably of 5.0 to 11.0 mol% preferably 6.0 to 9.0 mol% or
- $MFR_2$ of 2.0 to 8.0 g/10min, preferably 2.5 to 7.0, preferably 3.0 to 6.0, g/10 min.

5. The propylene copolymer composition according to any of the preceding claims, wherein the polypropylene matrix component of the heterophasic copolymer of propylene (B) is a homopolymer of propylene.

6. The propylene copolymer composition according to any of the preceding claims, which comprises, based on the combined amount of the random copolymer of propylene (A) and the heterophasic copolymer of propylene (B)

- 90 to 99.5 wt%, preferably 91 to 99.2, wt% of the random copolymer of propylene (A), and
- 0.5 to 10 wt% preferably 0.8 to 9.0, wt%of the heterophasic copolymer of propylene (B).

7. The propylene copolymer composition according to any of the preceding claims, which comprises

- in combined amount of 90 to 99.9999 wt% of the random copolymer of propylene (A) and the heterophasic copolymer of propylene (B) based on the total amount (100 wt%) of the propylene copolymer composition, and
- 0.0001 to 5 wt% of additives, based on the total amount of the propylene copolymer composition.

8. The propylene copolymer composition according to any of the preceding claims, wherein the propylene copolymer composition has a Charpy Notched Impact Strength at 23°C of 20 to 60 $kJ/m^3$, preferably 30 to 55 $kJ/m^3$, when determined according to ISO 179/1 eA:2000 using notched injection moulded specimen.

9. The propylene copolymer composition according to any of the preceding claims, wherein the propylene copolymer composition has a Tensile Modulus of 890 to 1000 MPa, preferably 900 to 990 MPa, when determined according to ISO 527-2:1996 using type 1A injection moulded test specimen prepared according to EN ISO 1873-2.

10. The propylene copolymer composition according to any of the preceding claims, wherein the propylene copolymer composition has a Tensile Strain at Break of 430 to 600 %, preferably 440 to 550 %, when determined according to ISO 527-2:1996 using type 1A injection moulded test specimen prepared according to ISO 527-2:1996.

11. The propylene copolymer composition according to any of the preceding claims, wherein the propylene copolymer composition, preferably the heterophasic copolymer of propylene (B), comprises from 0.1 to 10000 ppm by weight of a nucleating agent, which is preferably a polymer of vinyl compound according to the following formula

CH2=CH-CHR1R2            (I)

wherein R1 and R2 together form a 5- or 6-membered saturated, unsaturated or aromatic ring, or independently represent an alkyl group comprising 1 to 4 carbon atoms, preferably together form a 5 or 6 membered saturated, unsaturated or aromatic ring, optionally containing substituents, or are independently selected from C1 to C4-alkyl groups whereby in case R1 and R2 form an aromatic ring the hydrogen atom of the -CHR1 R2 moiety is not present, and most preferably the nucleating agent is a vinyl cyclohexane (VCH) polymer, preferably.

12. A process for producing the propylene copolymer composition according to any of the preceding claims, wherein the random copolymer of propylene (A), the heterophasic copolymer of propylene (B) and the optional additives are mixed together by mechanical mixing means, preferably by mixing in an extruder.

13. An article, preferably a pipe or a pipe fitting comprising the propylene copolymer composition according to any of the preceding claims 1 to 11.

14. An article according to claim 13, which is a pipe, preferably a pressure pipe, more preferably a pressure pipe for hot and cold water applications.

15. A process for producing a pipe as defined in claim 14 comprising the steps of:

  - producing the propylene copolymer composition according to any of the preceding claims 1 to 11 by mixing the random copolymer of propylene (A), the heterophasic copolymer of propylene (B) and the optional additives using mechanical mixing means, preferably by mixing in an extruder, and
  - extruding the polymer to a form of a pipe.

16. The use of the propylene copolymer composition according to any of the preceding claims 1 to 11 for producing an article according to any of the preceding claims 13 or 14.

Europäisches
Patentamt

European
Patent Office

Office européen
des brevets

**EUROPEAN SEARCH REPORT**

Application Number

EP 14 16 5096

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 97/40080 A1 (BOREALIS AS [DK]; HAERKOENEN MIKA [FI]; MALM BO [FI]; NYMARK ANDERS [F) 30 October 1997 (1997-10-30) * example 14; table 2 * ----- | 1-16 | INV. C08L23/14 |
| A | EP 2 562 215 A1 (BOREALIS AG [AT]) 27 February 2013 (2013-02-27) * example 3; table 6 * ----- | 1-16 | |

TECHNICAL FIELDS
SEARCHED        (IPC)

C08L

The present search report has been drawn up for all claims

| Place of search | Date of completion of the search | Examiner |
|---|---|---|
| Munich | 10 June 2014 | Knutzen-Mies, Karen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 16 5096

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2014

| Patent document cited in search report | | Publication date | Patent family member(s) | | Publication date |
|---|---|---|---|---|---|
| WO 9740080 | A1 | 30-10-1997 | AU | 2571097 A | 12-11-1997 |
| | | | CN | 1219180 A | 09-06-1999 |
| | | | DE | 69714429 D1 | 05-09-2002 |
| | | | DE | 69714429 T2 | 20-03-2003 |
| | | | EP | 0894103 A1 | 03-02-1999 |
| | | | ES | 2180967 T3 | 16-02-2003 |
| | | | FI | 961722 A | 20-10-1997 |
| | | | MY | 118766 A | 31-01-2005 |
| | | | US | 6221974 B1 | 24-04-2001 |
| | | | WO | 9740080 A1 | 30-10-1997 |
| | | | ZA | 9703300 A | 28-01-1998 |
| EP 2562215 | A1 | 27-02-2013 | EP | 2562215 A1 | 27-02-2013 |
| | | | WO | 2013029699 A1 | 07-03-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 8707620 A
- WO 9221705 A
- WO 9311165 A
- WO 9311166 A
- WO 9319100 A
- WO 9736939 A
- WO 9812234 A
- WO 9933842 A
- EP 491566 A
- EP 591224 A
- EP 586390 A
- WO 9219659 A
- WO 9219653 A
- WO 9219658 A
- US 4347160 A
- US 4382019 A
- US 4435550 A
- US 4465782 A
- US 4473660 A
- US 4530912 A
- US 4560671 A
- WO 9858975 A
- WO 9858976 A
- EP 887380 A
- WO 9858977 A
- EP 0887379 A
- WO 9212182 A
- WO 2004000899 A
- WO 2004111095 A
- WO 9924478 A
- WO 9924479 A
- WO 0068315 A
- EP 1028984 A